## Europäisches Patentamt

## European Patent Office

## Office européen des brevets

(19)

(11) Numéro de publication: **0 091 381**
**B1**

(12)

# FASCICULE DE BREVET EUROPÉEN

(45) Date de publication du fascicule du brevet:
**14.01.87**

(21) Numéro de dépôt: **83400699.1**

(22) Date de dépôt: **06.04.83**

(51) Int. Cl.⁴: **C 03 B 37/04,** D 01 D 5/18,
D 04 H 1/00, D 04 H 3/16

(54) **Perfectionnements aux techniques de formation de fibres par centrifugation et étirage gazeux.**

(30) Priorité: **06.04.82 FR 8205920**

(43) Date de publication de la demande:
**12.10.83 Bulletin 83/41**

(45) Mention de la délivrance du brevet:
**14.01.87 Bulletin 87/3**

(84) Etats contractants désignés:
**AT BE CH DE FR GB IT LI LU NL SE**

(56) Documents cité:
**FR-A-1 342 362**
**FR-A-2 147 765**
**FR-A-2 319 590**
**FR-A-2 459 783**
**US-A-3 326 650**
**US-A-4 263 033**

(73) Titulaire: **ISOVER SAINT- GOBAIN, Les Miroirs 18,
avenue d'Alsace, F-92400 Courbevoie (FR)**

(72) Inventeur: **Battigelli, Jean, 17 rue Edouard Vaillant,
F-60290 Rantigny (FR)**
Inventeur: **Barthe, Marie- Pierre, 11 le Haras au
Bois Vieux chemin de Senlis, F-60270 Gouvieux
(FR)**
Inventeur: **Bouquet, François, 30 rue Edouard
Vaillant, F-60290 Rantigny (FR)**

(74) Mandataire: **Le Vaguerese, Sylvain Jacques,
SAINT- GOBAIN RECHERCHE 39, quai Lucien
Lefranc, F-93304 Aubervilliers Cedex (FR)**

LIBER, STOCKHOLM 1987

## Description

La présente invention traite d'une façon générale du fibrage du verre ou d'autres matériaux minéraux thermoplastiques et traite en particulier des techniques de fibrage dans lesquelles le matériau en fusion à fibrer est transformé par centrifugation au moyen d'un centrifugeur tournant rapidement en une multitude de filets de verre qui sont étirés en fibres par un jet gazeux annulaire concentrique émis par un brûleur à combustion interne adjacent à la périphérique du centrifugeur dirigé perpendiculairement aux filets centrifugés, cette technique de fibrage étant appelée "étirage par centrifugation et jet". Les fibres après avoir été imprégnées de liant, sont rassemblées sur un convoyeur perforé pour former un matelas ou mat, lequel passe alors dans une étuve.

La technique de fibrage décrite ci-dessus de façon générale est utilisée industriellement depuis de nombreuses années pour la production des produits d'isolation en fibre minérale, et une proportion importante des isolants de ce type fabriqués à l'heure actuelle est produite en utilisant cette technique. Les détails des différents modes de réalisation de ce procédé sont décrits par exemple dans les brevets US n°s R.E. 24 708, 2 984 864, 2 991 501, 3 007 196, 3 017 663, 3 020 586, 3 084 381, 3 084 525, 3 254 977, 3 304 164, 3 819 345 et 4 203 745.

Pour mettre en oeuvre cette technique, une grande quantité d'énergie calorifique est nécessaire d'abord pour porter le verre à l'état fondu, et ensuite pour produire le jet d'étirage. Les disponibilités incertaines et le coût élevé de l'énergie ont créé une demande croissante de produits d'isolation en fibre de verre tandis que les mêmes facteurs ont provoqué une hausse importante du coût de production de ces produits.

En conséquence, tous les efforts ont été faits pour améliorer le rendement du procédé de fibrage décrit ou pour utiliser des procédés de fibrage de remplacement. Par exemple, au cours de ces derniéres années un procédé de fabrication de fibres minérales a été développé, dans lequel il n'est utilisé qu'un étirage centrifuge de la fibre, essentiellement pour éviter les besoins d'énergie requis pour le procédé d'étirage par jet gazeux.

La formation de filets par centrifugation combinée avec l'étirage par jet tels que décrits ci-dessus de façon générale, demeure cependant un procédé apprécié à la fois en raison de l'excellente qualité du mat de fibres obtenu de cette façon et du fait qu'une partie importante de l'industrie de l'isolation est à l'heure actuelle équipée d'un matériel permettant d'appliquer ce procédé. Il en résulte que toute amélioration apportée à cette technique est d'une grande importance pour l'industrie. D'après la description qui va suivre, on comprendra que la présente invention apporte de nettes améliorations aux procédés de fibrage centrifuge avec étirage au moyen d'un jet pour ce qui concerne la qualité du produit, la production et le coût de fonctionnement.

Etant donné que la formation des fibres est dans la pratique une technique extrêmement complexe, caractérisée par un grand nombre de paramètres variables, il n'est pas nécessaire de parler ici des nombreux détails de ces procédés connus, référence étant faite aux brevets antérieurs. On étudiera cependant un nombre limité d'aspects de l'art antérieur, en particulier les facteurs pour lesquels la présente invention diverge nettement de la pratique antérieure.

Parmi les nombreuses variables à examiner, la construction du centrifugeur est particulièrement importante pour réaliser de façon satisfaisante le procédé de fibrage par centrifugation.

La température et la vitesse du jet de même que la disposition des lèvres fournissant le jet gazeux et la direction du jet par rapport aux parois du centrifugeur sont aussi des facteurs importants pour optimiser l'étirage de la fibre. La durée de vie du centrifugeur est un facteur important, en particulier au regard de la durée de vie relativement courte de ce type de centrifugeur, et du coût très élevé du remplacement du centrifugeur. D'autres caractéristiques intervenant sur la qualité des produits sont présentés dans la description d'exemples de mise en oeuvre de l'invention.

Les centrifugeurs utilisés pour les premiers équipements d'étirage centrifuge avec jet avaient un diamètre d'environ 200 mm. On s'est rendu compte que pour un centrifugeur d'un certain type de fabrication et d'une certaine dimension, le débit ou tirée, normalement exprimé en tonnes par jour de fibres produites, ne pouvait être augmenté qu'en contrepartie d'une diminution correspondante de la qualité de la fibre. On s'est également rendu compte qu'il y avait des limites d'ordre pratique à la tirée par orifice pour maintenir une qualité de fibre acceptable. Néanmoins, les nécessités économiques d'augmentation de la production d'une ligne donnée ont généralement entraîné l'augmentation de la tirée en dépit de la baisse de la qualité du produit. Le terme "qualité" dans ce sens se rapporte au poids du produit par unité de surface pour une résistance thermique et une épaisseur nominale de produit données. Un produit de qualité inférieure est de ce fait un produit plus lourd - tout en ayant la même valeur d'isolation - que le produit de meilleure qualité. Le produit de qualité inférieure est donc inférieur en qualité parce qu'il nécessite notamment une plus grande quantité de verre pour une surface donnée, et par conséquent ce produit est plus coûteux à fabriquer.

Les tentatives pour augmenter la tirée se sont dirigées notamment vers l'augmentation du diamètre du centrifugeur d'abord à 300 mm et plus récemment à 400 mm.

Des améliorations ont été obtenues, mais l'accroissement du diamètre correspond aussi à une augmentation de l'accélération centrifuge.

Bien que des forces centrifuges élevées soient nécessaires pour produire l'écoulement du matériau en fusion à travers les trous du centrifugeur et de ce fait pour former les filets primaires, des forces centrifuges élevées réduisent la durée de vie du centrifugeur.

Etant donné que la durée de vie d'un centrifugeur varie effectivement en sens inverse des forces d'accélération centrifuges auxquelles le centrifugeur est soumis, il a été jusqu'à présent jugé souhaitable de ne pas trop accroître le diamètre du centrifugeur dans le but d'essayer de prolonger sa durée de vie.

Un autre facteur important, pour ces techniques est la finesse (diamètre moyen) des fibres produites. Il est bien reconnu que pour une certaine masse de fibres par unité de surface plus les fibres sont fines, plus grande est la résistance thermique de la couche. Un produit isolant formé de fibres plus fines peut, en conséquence, être plus mince - avec la même valeur isolante qu'un produit plus épais formé de fibres plus grosses. Ou bien, de même, un produit constitué de fibres plus fines peut présenter une masse par unité de surface plus faible qu'un produit en grosses fibres de même épaisseur et avoir la même valeur isolante.

Etant donné que les produits d'isolation sont généralement commercialisés avec une résistance thermique garantie (valeur de R) pour une épaisseur minimale, la finesse des fibres est un facteur important dans la détermination de la masse du produit par unité de surface, connu comme le grammage nominal. Un produit en fibres plus fines présente un grammage nominal plus faible et de ce fait nécessite moins de verre et permet des économies de fabrication.

D'un point de vue économique, cependant, la finesse des fibres, comme d'autres facteurs, est généralement considérée comme un compromis. On sait en effet que l'on peut obtenir des fibres plus fines avec des vitesses de jet plus élevées ou/et en utilisant des compositions de verre moins dur, c'est-à-dire des verres dont la viscosité adéquate est atteinte pour des températures moins élevées. L'augmentation de la vitesse du jet entraîne une augmentation directe des coûts d'énergie et le propre des verres tendres est qu'ils contiennent des composés plus chers et qui, de plus, ont généralement des caractéristiques polluantes indésirables.

La finesse, qui peut être exprimée en termes de diamètre, en microns, représentant la valeur arithmétique moyenne des diamètres de fibres mesurés, est aussi communément exprimée sur la base d'un indice de finesse de la fibre, nommé "micronaire". Le micronaire est mesuré de la façon suivante. Une masse prédéterminée d'un échantillon par exemple de 5 grammes de fibre est placé à l'intérieur d'un compartiment d'un certain volume de façon à former une barrière perméable à de l'air passant par ce compartiment sous une pression prédéterminée. La mesure du débit d'air à travers l'échantillon dépend de la finesse de la fibre. C'est cette mesure obtenue au moyen d'un débitmètre qui constitue le micronaire.

En général, plus les fibres sont fines plus la résistance au passage de l'air dans l'échantillon est élevée. De cette façon on dispose d'une indication de la finesse des fibres de l'échatillon. A titre indicatif des fibres de diamètre moyen de 4 micromètres présentent un micronaire d'environ 2,9 sous 5 g et des fibres de diamètre moyen de 12 micromètres un micronaire d'environ 6,6 sous 5 g.

La valeur d'isolation d'un matelas de fibres ne dépend pas que de la finesse des fibres. La façon dont s'effectue le dépôt des fibres sur le convoyeur de réception, notamment la régularité de la distribution, l'orientation des fibres dans le produit d'isolation, jouent également un rôle important.

La résistance thermique d'un matelas de fibres varie en fonction du sens d'orientation des fibres par rapport au flux de chaleur mesuré, la résistance étant plus grande lorsque les fibres sont dirigées perpendiculairement au sens de flux de chaleur. En conséquence pour maximiser la résistance thermique d'un matelas isolant, il faut que les fibres soient orientées le plus possible parallèlement au convoyeur de réception et au plan du mat formé. En raison de la grande turbulence provoquée au-dessus du convoyeur de réception, le contrôle de l'orientation des fibres est difficile. Les efforts dans cette zone sont principalement orientés vers l'obtention d'une distribution relativement uniforme des fibres dans le sens de la largeur du convoyeur. Néanmoins il est intéressant pour faire en sorte que les fibres se déposent parallèlement au convoyeur, d'avoir des fibres longues.

En résumé l'analyse qui précède des techniques de formation des fibres auxquelles l'invention se rattache montre la grande variété des facteurs à prendre en considération pour l'obtention de résultats industriellement satisfaisantes. Cette analyse montre aussi les difficultés qu'il peut y avoir à améliorer ces résultats en raison de l'interdépendance de ces facteurs. Le but poursuivi par l'invention est en dépit de ces difficultés de parvenir à améliorer les propriétés des produits obtenus, notamment les propriétés isolantes thermiques des feutres dans des conditions de fonctionnement qui ne soient pas préjudiciables à la longévité du matériel mis en oeuvre.

Une des dernières publications dans ce domaine, la demande FR-A-2 459 783 qui sert de base pour préambule de la revendication 1, décrit notamment l'utilisation de centrifugeurs de 400 mm de diamètre (et pouvant atteindre 500 mm bien que les exemples ne concernent pas ces derniers, page 18 lignes 19-23) notamment pour accroître la production.

Les inventeurs ont constaté que des améliorations inattendues pouvaient être obtenues avec des centrifugeurs encore plus grands, notamment de 600 mm de diamètre et au-delà. Les raisons de ces améliorations ne sont pas entièrement claires, notamment celles relatives à la qualité des feutres préparés.

Dans le passage du centrifugeur de 400 mm au centrifugeur de 600 mm, la vitesse de rotation est réduite de façon à donner des forces d'accélération centrifuge au verre et à la paroi du centrifugeur dans des limites traditionnelles de sorte que l'alimentation des orifices en matériau à fibrer, de même que les contraintes sur la structure de la paroi ne s'écartent pas trop de celles de la technique antérieure.

De façon générale, la présente invention concerne les moyens de production de fibres et de mat fibreux isolant réalisé avec ces fibres. Selon l'invention, on utilise un dispositif comprenant un centrifugeur tournant autour d'un axe essentiellement vertical, des moyens pour entraîner ledit centrifugeur en rotation, des moyens pour conduire un filet de matériau fondu à l'état étirable dans le centrifugeur et l'amener sur la surface interne de la paroi périphérique dudit centrifugeur, un grand nombre d'orifices dans la paroi périphérique par lesquels le matériau fondu passe et forme des filaments, et des moyens pour étirer lesdits filaments en fibres, ces moyens comprenant un brûleur à combustion interne délivrant un jet gazeux annulaire adjacent à la partie extérieure de ladite paroi périphérique dirigé vers le bas, ledit jet gazeux annulaire étant à une température élevée contribuant au maintien des filaments de matériau dans des conditions étirables pendant un temps suffisant pour l'étirage, caractérisé en ce que le diamètre du centrifugeur est compris entre 550 et 1500 mm et le centrifugeur est animé d'un mouvement de rotation dans des conditions pour lesquelles sa périphérie est soumise à une accélération centrifuge comprise entre 4000 et 20000 m/s2.

Les moyens selon l'invention peuvent comprendre en plus un système selon la revendication 1 dans lequel les fibres formées sont dirigées dans une hotte de réception ou chambre de réception et sont rassemblées sur un convoyeur perforé horizontal disposé au fond de la chambre de réception.

Dans la suite est donnée une description détaillée des moyens utilisés pour obtenir l'amélioration des performances de même qu'une description de quelques unes des propriétés du produit obtenu.

Bien que tous les efforts aient été entrepris pour distinguer les principaux facteurs responsables de l'amélioration de la performance du centrifugeur de plus grand diamètre, à l'heure actuelle ces efforts n'ont pas permis de conclure de façon complète et précise.

Les explications théoriques telles qu'elles sont exposées dans cette description doivent être considérées comme une tentative, soumise à de plus amples vérifications expérimentales et n'ont pas de caractère limitatif.

- la figure 1 est une vue en élévation partielle d'une coupe montrant l'ensemble d'un centrifugeur et d'un brûleur conformément à la présente invention;

- la figure 2 est une vue en élévation schématique montrant le fonctionnement d'un centrifugeur classique de petit diamètre et un convoyeur de réception de la fibre, la vue étant prise transversalement au convoyeur et donnant une image de la répartition inégale et de l'orientation des fibres au hasard sur le convoyeur en l'absence de système de répartition de la fibre;

- la figure 3 est une une semblable à la figure 2 mais correspondant à un centrifugeur de plus grand diamètre fonctionnant conformément à l'invention, montrant la répartition relativement uniforme des fibres sur le convoyeur;

- la figure 4 est une vue en plan schématique montrant plusieurs centrifugeurs et leur disposition par rapport au convoyeur;

- la figure 5 est une vue en élévation schématique de l'appareil montré à la figure 4;

- la figure 6 est un graphique de l'inverse de la masse par unité de surface du feutre formé, en fonction du diamètre du centrifugeur, pour des fibres de finesses différentes;

- la figure 7 est un graphique montrant la consommation d'énergie, en fonction du diamètre du centrifugeur, pour des fibres produites à une accélération centrifuge constante.

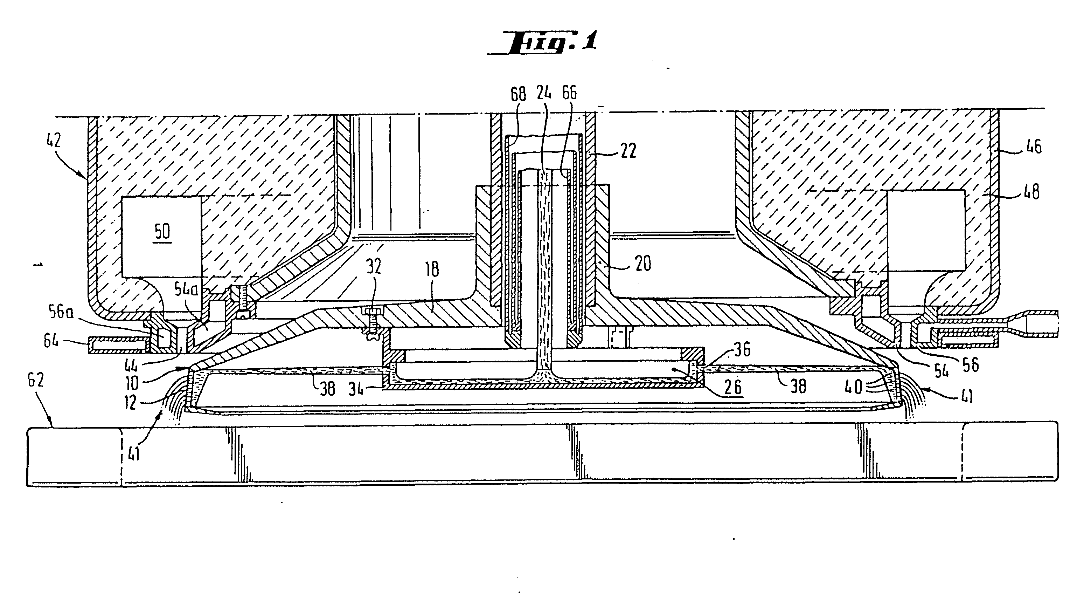

Se référant aux dessins et en particulier à la figure 1, on montre une zone de fibrage conformément à la présente invention comprenant un centrifugeur 10 avec une paroi périphérique 12 et un flasque 18. Le centrifugeur 10 est monté par un moyeu 20 sur un arbre vertical 22. L'arbre 22 est soutenu en rotation d'une façon bien connue au moyen de paliers appropriés fixés à un bâti et entraîné en rotation à une vitesse prédéterminée par un moteur électrique et un entraînement à courroie. Le support de l'arbre et les détails de l'entraînement sont classiques et ne sont pas montrés sur les figures.

L'arbre 22 est creux, permettant au filet de matériau en fusion 24 de s'écouler dans un panier 26 fixé au-dessous de l'extrémité inférieure de l'arbre par des écrous 32.

Le panier 26 comprend une paroi cylindrique 34 pourvue de nombreux orifices 36 par lesquels passe le matériau en fusion transformé sous l'influence de la force centrifuge en filets 38 qui sont dirigés à l'intérieur de la paroi du centrifugeur 12. Un grand nombre d'orifices 40 percés dans la paroi périphérique 12 du centrifugeur servent à former de nombreux filets de matériau fondu 41 au fur et à mesure que le matériau en fusion traverse les orifices sous l'effet de la force centrifuge.

Un brûleur annulaire à combustion interne 42 est disposé audessus de la paroi du centrifugeur et comprend une tuyère 44 formant le jet annulaire au-dessus de la paroi périphérique 12 du centrifugeur. Le jet annulaire adjacent à la paroi 12 entraîne et étire les filets de matériau 41 sortant des orifices 40. Le brûleur 42 comprend un carter de métal 46 enveloppant une chemise réfractaire 48 délimitant une chambre de combustion annulaire 50 dans laquelle un mélange air-combustible est introduit. La tuyère 44 communique avec la chambre de combustion 50 et est formée par les lèvres internes et externes de la tuyère 54 et 56. Ces lèvres 54 et 56 comprennent respectivement des circuits de refroidissement internes 54a et 56a dans lesquels on introduit un liquide de refroidissement tel que l'eau.

Afin de maintenir le bilan thermique du centrifugeur et des fibres pendant l'étirage, une couronne de chauffage à induction à haute fréquence 62 est installée juste au-dessous du centrifugeur concentriquement à ce dernier. Son diamètre interne est un peu plus grand que celui du centrifugeur pour éviter l'interférence avec le flux descendant des fibres entraînées par le jet annulaire.

Un jet auxiliaire est créé par une couronne de soufflage annulaire 64 disposée à l'extérieur des lèvres du brûleur et branchée sur une source de gaz comprimé tel que air, vapeur ou produits de combustion.

L'arbre creux 22 comprend plusieurs tubes concentriques fixes. La paire la plus profonde de ces tubes délimite un passage annulaire de refroidissement 66 par lequel l'eau de refroidissement circule tandis que la paire la plus à l'extérieur délimite un passage annulaire 68 par lequel un mélange combustible peut passer et être enflammé pour préchauffer le panier 26 avant de faire démarrer le centrifugeur.

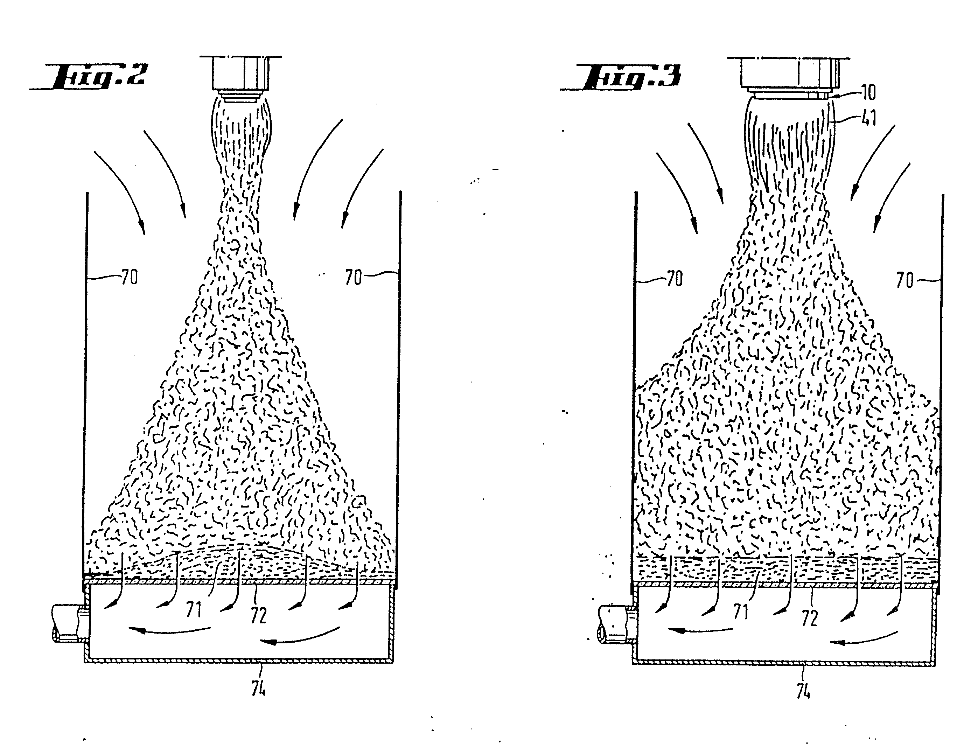

Les fibres produites par le centrifugeur et le jet gazeux passent dans une chambre de réception ou hotte de réception 70 et de là se déposent sous la forme d'un matelas 71 sur un convoyeur perforé 72 comme les figures 2, 3 et 5 le montrent schématiquement. Un caisson d'aspiration 74 sous le convoyeur aspire de façon classique le volume élevé des gaz passant à travers le convoyeur.

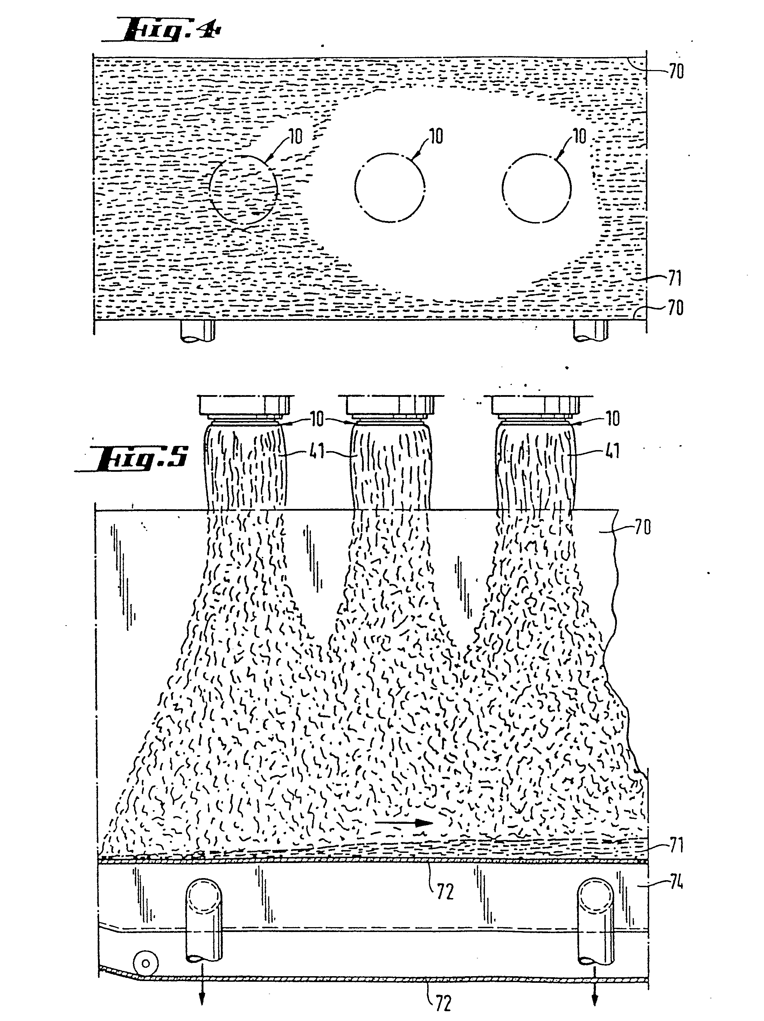

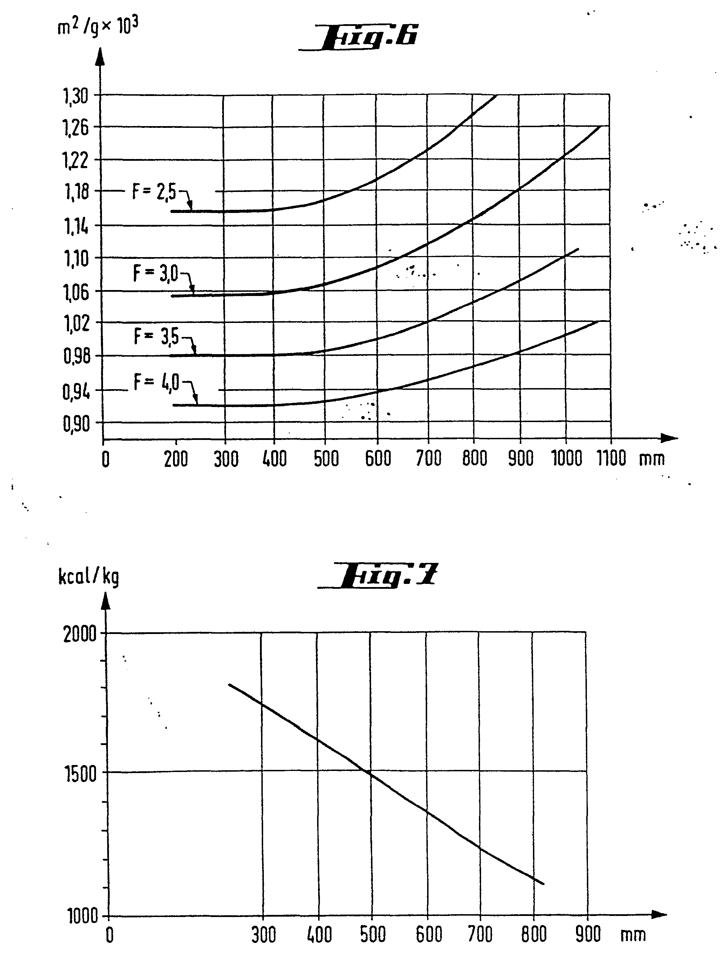

Comme le montrent les figures 4 et 5, plusieurs machines de fibrage, chacune ayant un centrifugeur 10, sont utilisées de façon classique pour produire le matelas 71 et selon l'arrangement préféré de l'invention sont disposées en ligne le long de l'axe longitudinal du convoyeur 72. Dans une installation industrielle, le nombre des centrifugeurs dirigeant les fibres sur un convoyeur est de façon caractéristique six à dix ou plus.

En ce qui concerne le fonctionnement de l'équipement décrit, le centrifugeur 10 comprenant le panier 26 est préchauffé d'une façon classique en utilisant la combustion des gaz passant à travers le passage 68, la chaleur du brûleur 50, la couronne de chauffage 62 et les sources supplémentaires semblables qui peuvent être nécessaires.

Le centrifugeur tournant à une vitesse prédéterminée et le brûleur étant réglé de façon à fournir une pression dans la chambre provoquant une vitesse du jet suffisante pour donner l'étirage et la finesse des fibres voulus, le filet de matériau en fusion 24 entre dans l'arbre creux 22 du centrifugeur à partir d'un avant-corps de four, ou d'une autre source de matériau en fusion, disposé au-dessus du centrifugeur. Le filet de matériau en fusion atteignant le panier 26 coule sur le fond de ce panier sous l'influence de la force centrifuge et passe par les orifices 36 du panier sous la forme de filets de matériau 38 qui sont dirigés vers la paroi périphérique 12.

Sous l'influence de la force centrifuge plus intense exercée sur la paroi 12, le matériau passe par les multiples petits orifices 40 et sort à l'extérieur de la paroi périphérique, sous la forme de multiples filéts 41 qui sont soumis immédiatement à l'effet d'étirage du jet venant du brûleur à combustion interne 50 dirigé sur l'extérieur de la paroi. Les filets de matériau 41 sont maintenus à l'état étirable par la température élevée du jet pendant un temps suffisant à leur étirage. La finesse des fibres étirées est réglée notamment par le contrôle de la vitesse du jet qui à son tour est fonction de la pression du brûleur. Une augmentation de la pression du brûleur et de la vitesse du jet entraîne un étirage plus intense et de ce fait des fibres plus fines.

Il faut noter cependant qu'un accroissement de cet étirage ne correspond pas nécessairement à une amélioration globale des produits préparés. Lorsque l'étirage par les gaz devient trop violent, la qualité des fibres est ordinairement moins bonne.

Le flux des fibres étirées, dans la chambre de réception ou hotte de réception 70 tel qu'on le voit sur les figures 3 et 5, est accompagné par l'induction de quantités importantes d'air comme l'indiquent les flèches placées en haut de la chambre de réception. L'induction d'air et le ralentissement rapide des fibres à l'intérieur de la chambre de réception produisent une importante expansion du voile de fibres et, pour des raisons exposées ci-dessous en plus amples détails, donnent une meilleure répartition des fibres au sein du produit et sur la largeur du convoyeur. Par ailleurs, on constate une diminution de la turbulence dans la zone du convoyeur, ce qui conduit à une orientation meilleure des fibres pendant la formation du matelas de fibres avec en conséquence une amélioration des propriétés thermiques du matelas.

Une pulvérisation de liant est appliquée sur les fibres étirées à la partie supérieure de la chambre de réception de façon classique. Le schéma de l'appareillage d'application du liant a été omis sur les figures 2 à 5 dans le but de simplifier ces figures.

Le diamètre du centrifugeur est un facteur important de la présente technique.

Les centrifugeurs les plus grands utilisés dans l'industrie pour les procédés d'étirage centrifuge avec jet ont eu jusqu'à présent un diamètre de l'ordre de 400 mm. Une augmentation du diamètre du centrifugeur n'était pas jugée souhaitable en raison notamment des difficultés qui pouvaient en résulter pour ce qui concerne la durée de vie du centrifugeur.

Les inventeurs ont découvert que des augmentations importantes du diamètre du centrifugeur peuvent conduire à des feutres de meilleure qualité sans qu'il en résulte une durée de vie sensiblement moindre.

D'excellents résultats ont été obtenus en utilisant un centrifugeur de 600 mm, et des centrifugeurs de beaucoup plus grands diamètres peuvent être utilisés. Les avantages de l'invention peuvent être atteints avec des centrifugeurs d'un diamètre dépassant 500 mm et dans une gamme d'environ 550 mm à environ 1500 mm. La gamme la plus appréciée des diamètres est celle de 600 à 1000 mm.

En choisissant une vitesse de rotation du centrifugeur donnant des forces d'accélération centrifuges qui ne s'écartent pas trop de celles qui sont ordinairement utilisées avec des centrifugeurs plus petits (par exemple dans la gamme d'environ 8000 à 14000 m/s2), la durée de vie du centrifugeur n'est pas sensiblement affectée.

La présente invention envisage une vitesse de rotation du centrifugeur qui, tenant compte de la gamme des diamètres la meilleure qui a été décrite ci-dessus, communique une accélération centrifuge à la paroi périphérique dans la gamme d'environ 4000 à environ 20000 m/s2. L'accélération centrifuge se situe de préférence dans la gamme de 6000 à 16000 m/s2 environ.

Le graphique de la figure 6 montre les résultats obtenus avec des centrifugeurs de différentes dimensions à une accélération pratiquement constante d'environ 10000 m/s2. La qualité du feutre, exprimée ici par l'inverse de la masse de fibre par unité de surface, pour des micronaires de 2,5 , 3,0 , 3,5 et 4,0 (sous 5 grammes) devient nettement meilleure, pour des diamètres dépassant 500 mm, comme le montre sur le graphique le net changement de pente.

La différence de grammage pour une même qualité isolante est d'autant plus sensible pour les produits obtenus au moyen de centrifugeurs de grand diamètre que les fibres sont plus fines, autrement dit que le micronaire F est plus petit. En conséquence, l'utilisation de centrifugeurs de diamètre supérieur à 500 mm est d'autant plus avantageuse que les fibres produites sont plus fines.

Pour un micronaire de 2,5 sous 5 g, l'amélioration est très sensible. On constate ainsi par exemple que le passage d'un centrifugeur de 400 mm à un centrifugeur de 600 mm permet déjà une diminution du grammage de l'ordre de 5 %.

La figure 6 montre encore que ces améliorations n'étaient pas prévisibles sur la base des résultats obtenus pour les centrifugeurs de l'art antérieur. En effet, les courbes ne deviennent sensiblement ascendantes qu'au delà de 400 mm. Pour les valeurs inférieures, l'augmentation du diamètre ne se traduit pas par des variations décelables et significatives compte tenu de la précision des mesures.

Considérant les valeurs préférées des diamètres et des accélérations centrifuges décrites ci-dessus, la vitesse périphérique du centrifugeur se situe de façon préférée dans la gamme de 50 à 90 m/s environ. Avantageusement la vitesse périphérique est comprise entre 55 m/s et 75 m/s environ.

Un autre facteur ayant une grande influence sur la production de la fibre est la pression du brûleur dont le réglage affecte directement la finesse de la fibre et dont dépend aussi la consommation énergétique du procédé.

Avec l'utilisation du brûleur du type tel que montré sur la figure 1, la gamme préférée des pressions du brûleur se situe entre 100 et 900 mm de colonne d'eau environ, avec une pression préférée de 200 à 600 mm de colonne d'eau. Pour des raisons imparfaitement comprises, les inventeurs ont constaté que la pression du brûleur nécessaire pour produire une fibre d'une certaine finesse diminue en fonction de l'augmentation du diamètre du centrifugeur, même si l'accélération centrifuge n'est pas augmentée. Ce facteur peut être l'une des raisons de la meilleure qualité de la fibre notée lorsque des centrifugeurs plus grands sont utilisés. Une pression du brûleur plus faible en effet réduit les risques de rupture de fibres sous l'effet du courant gazeux d'étirage.

Dans un courant gazeux moins violent on peut aussi penser que les risques de collision ou de recollage des fibres entre elles sont moindres. Ceci se traduirait pour les produits selon l'invention par des fibres plus longues dans l'ensemble et aussi plus régulières.

L'amélioration de la qualité des fibres serait à l'origine de ce que nous avons signalé plus haut en ce qui concerne la diminution du grammage nécessaire pour une qualité isolante et une finesse donnée.

La diminution de la pression du brûleur se traduit aussi par une diminution de la consommation énergétique pour la production d'une même masse de fibres.

Les résultats des études effectués par les inventeurs à ce sujet, et qui sont reportés sur la figure 7, montrent une forte décroissance de l'énergie consommée lorsque le diamètre du centrifugeur augmente. La courbe tracée sur ce graphique est établie pour une accélération constante de 10000 m/s2. Dans ces essais la densité des orifices sur la paroi des centrifugeurs, les dimensions des orifices, la tirée par orifice et la finesse des fibres produites sont identiques.

Le graphique de la figure 7 correspond à la production d'une fibres très fine (micronaire 3 sous 5 g). On constate notamment que dans les conditions de l'invention, c'est-à-dire avec les centrifugeurs de diamètre supérieur à 500 mm, la consommation calorifique est inférieure à 1500 kcal/kg alors qu'elle est par exemple de 1750 kcal/kg de fibres produites avec un centrifugeur de 300 mm de diamètre.

Il faut remarquer que la consommation calorifique pour la formation du jet gazeux d'étirage représente la part la plus importante de l'énergie consommée pour produire les fibres. Elle représente à peu près les 4/5ème du total. Une réduction de cette consommation est donc très sensible sur les coûts de production.

Il faut encore souligner que si les valeurs de consommation calorifiques correspondent à une même qualité de fibres, les quantités produites ne sont pas les mêmes. Ainsi, pour des conditions permettant d'obtenir la même qualité de fibres, des centrifugeurs de 300, 400 et 600 mm produisent respectivement 10, 13,5 et 20 tonnes de fibres par jour. L'économie sur la consommation s'ajoute donc aux économies réalisées par l'augmentation de la production.

La largeur des lèvres du brûleur 44 se situe de préférence dans la gamme 5 à 20 mm environ avec une largeur préférée d'environ mm. La température du brûleur se tient de préférence dans la gamme 1300° à 1700°C environ avec une température préférée d'environ 1500°C.

Avec les centrifugeurs considérés par la présente invention, on a trouvé qu'une meilleure répartition des fibres sur le tapis ainsi qu'une meilleure orientation des fibres dans le matelas peuvent être obtenues.

Des mesures ont été faites sur des produits réalisés selon la technique antérieure et des produits réalisés avec la technique de la présente invention.

Il existe plusieurs méthodes pour mesurer la répartition à l'intérieur du produit. Une des plus simple consiste à découper le produit en une série de petits parallélépipédes ou "cubes" (par exemple de dimensions 25 x 25 x 45 mm) que l'on pèse individuellement. Les différents poids que l'on peut exprimer en masses volumiques locales rapportées au centre de gravité de chaque "cube" donnent une image tridimensionnelle de la répartition. Pour plus de commodité pour les comparaisons on calcule le coefficient de variation $C_v$ de la répartition en rapportant l'écart quadratique (racine carrée de la moyenne des carrés des écarts) à la valeur moyenne des poids des "cubes".

Ainsi par exemple on a trouvé un écart très significatif entre un produit réalisé avec la technique antérieure: $C_v = 6,1\%$ et celui réalisé avec la technique de la présente invention $C_v = 2,6\%$. La distribution des fibres dans les échantillons analysés est donc très sensiblement meilleure pour les produits préparés dans les conditions de l'invention.

En ce qui concerne l'exemple de l'invention représenté sur la figure 3 le diamètre relativement grand du centrifugeur donne une nappe de fibre qui s'étale bien avant d'atteindre le tapis. Dans la forme représentée, le convoyeur étant peu large, la nappe couvre la totalité de la largeur du tapis. Les fibres du bord de la nappe se heurtent aux parois latérales de la hotte de réception 70 et sont redirigées à l'intérieur pour donner un matelas 71 d'une épaisseur relativement uniforme. Le dépôt des fibres se passe avec un minimum de turbulences et en conséquence l'orientation des fibres se fait en grande partie parallèlement au sens du convoyeur.

Par opposition, un exemple de l'art antérieur est donné à la figure 2. Dans les mêmes conditions en dehors des dimensions du centrifugeur, la nappe de fibres est trop étroite pour atteindre les parois de la hotte. Les fibres se déposent en plus grande quantité au centre du convoyeur. Il se forme un matelas qui n'est pas uniforme, épais au centre et mince sur les côtés. D'autre part, contrairement à ce qui se produit quand il s'agit d'un grand centrifugeur tel qu'à la figure 3, il se développe une grande turbulence aux alentours du bord de la nappe proche du convoyeur; cette turbulence provoque un dépôt anarchique des fibres, l'orientation des fibres étant nettement moins parallèle au convoyeur que l'orientation produite avec l'appareil et la méthode de la présente invention.

Les difficultés de distribution des fibres indiquées cidessus sont traditionnelles et différentes méthodes pour améliorer la répartition ont été proposées antérieurement.

Pour les grandes largeurs de convoyeur il est possible de disposer transversalement deux, trois ou plus, ensembles de fibrage dans un sens transversal au convoyeur, mais si théoriquement cette disposition permet une répartition uniforme, elle présente l'inconvénient majeur que pour tout arrêt d'un seul ensemble de la rangée, pour changer le centrifugeur par exemple, la désorganisation de la répartition provoquée par cet arrêt entraine le rejet du produit formé par tous les autres ensembles pendant toute la durée de l'intervention. Pour cette raison on préfère généralement disposer les ensembles de fibrage en une seule ligne dans le sens longitudinal au convoyeur, car dans ce cas tout arrêt d'un ensemble n'entraine pas de changement notable sur la répartition et il est possible de continuer à produire, la production n'étant diminuée que de la baisse de tirée de l'ensemble arrêté.

Avec des ensembles disposés de cette manière on utilise différents auxiliaires de répartition pour essayer d'obtenir une meilleure répartition des fibres. Parmi ces moyens de répartition, il y a par exemple des soufflettes situées sur les côtés de la hotte de réception (brevet US 3 030 659), des souffleurs oscillants ou alternatifs ou des volets déflecteurs contrôlant l'air induit (brevet US 3 255 943), des conduits oscillants pour le voile de fibres (brevet US 3 830 638) et l'oscillation de la machine de fibrage (US RE 30 192). Bien que ces dispositifs puissent donner une meilleure répartition de la fibre, ils introduisent en général une plus forte turbulence dans la chambre de réception, donnant de ce fait une orientation encore moins bonne aux fibres dans le matelas. Etant donné que l'orientation de la fibre est extrêmement importante pour un milieu fibreux isolant, l'orientation des fibres parallèlement au

convoyeur donnant de meilleures caractéristiques de résistance thermique, il est préférable de limiter au maximum le recours à ces moyens auxiliaires de répartition. Pour cette raison une plus grande nappe produite par de grands centrifugeurs conformément à l'invention est un facteur important pour optimiser la qualité du matelas fibreux. De plus, avec la présente invention on peut diminuer ou, dans le cas de feutres de petite largeur, supprimer les dispositifs auxiliaires de répartition et le coût de leur fonctionnement.

L'accroissement de la largeur de la nappe constaté au niveau du convoyeur est très supérieur à celui qui résulte simplement de sa dimension à l'origine, c'est-à-dire de l'accroissement du diamètre du centrifugeur.

On peut voir que la forme de la nappe de fibres juste sous le centrifugeur est plus favorable sur la figure 3 que sur la figure 2, la nappe en figure 3 se rétrécissant relativement peu sous le centrifgeur tandis que celle de la figure 2 est substantiellement rétrécie dans cette zone.

Des exemples de différents modes de fonctionnement selon l'invention sont indiqués dans le tableau suivant. L'exemple I qui ne correspond par aux conditions de l'invention figure à titre de comparaison.

| | Exemple No. | | | |
| --- | --- | --- | --- | --- |
| | I | II | III | IV |
| Diamètre centrifugeur (mm) | 400 | 600 | 800 | 1000 |
| Tirée par centrifugeur (t/jour) | 20 | 20 | 20 | 20 |
| Largeur bec brûleur (mm) | 7,7 | 7,7 | 7,7 | 6,5 |
| Pression brûleur (mm eau) | 430 | 350 | 400 | 420 |
| Température brûleur (°C) | 1500 | 1500 | 1500 | 1500 |
| Finesse (micronaire sous 5 g) | 4,2 | 3,5 | 3,0 | 2,5 |
| Grammage g/m² pour R = 2 m² °K/w à 297 °K | 1180 | 990 | 880 | 720 |
| Epaisseur nominale (mm) | 90 | 90 | 90 | 90 |

Ces exemples montrent que pour une même tirée 20 tonnes/jour, les produits obtenus selon l'invention sont sensiblement meilleurs.

En comparant les exemples I et II, on constate que pour une même résistance thermique, le grammage est plus faible selon l'invention et aussi que la pression et donc la consommation énergétique sont aussi plus faibles.

L'exemple III correspond à des conditions analogues à celles de l'exemple II mais avec un diamètre encore plus grand. Dans cet exemple la finesse est encore accrue et simultanément le grammage est encore réduit.

L'exemple IV est un autre exemple dans lequel la dimension du centrifugeur est encore accrue. La finesse et le grammage des produits obtenus selon cet exemple sont particuliérement bas, autrement dit les fibres sont très fines et la masse de fibres nécessaire pour une résistance thermique donnée est très réduite.

## Revendications

1. Dispositif pour la production de fibres à partir d'un matériau thermoplastique comprenant un centrifugeur (10) tournant autour d'un axe (22) essentiellement vertical, des moyens pour entraîner ledit centrifugeur en rotation, des moyens pour conduire un filet (24) de matériau fondu à l'état étirable dans le centrifugeur et l'amener sur la surface interne de la paroi périphérique dudit centrifugeur, un grand nombre d'orifices (40) dans la paroi périphérique par lesquels le matériau fondu passe et forme des filaments (41), et des moyens pour étirer lesdits filaments (41) en fibres, ces moyens comprenant un brûleur à combustion interne délivrant un jet gazeux annulaire adjacent à la partie extérieure de ladite paroi périphérique dirigé vers le bas, ledit jet gazeux annulaire étant à une température élevée contribuant au maintien des filaments de matériau dans des conditions étirables pendant un temps suffisant pour l'étirage, caractérisé en ce que le diamètre du centrifugeur est compris entre 550 et 1500 mm et le centrifugeur est animé d'un mouvement de rotation dans des conditions pour lesquelles sa périphérie est soumise à une accélération centrifuge comprise entre 4000 et 20000 m/s2.

2. Dispositif selon la revendication 1 dans lequel le centrifugeur (10) a un diamètre compris entre 600 et 1000 mm.

3. Dispositif selon la revendication 2 dans lequel le centrifugeur (10) est en rotation dans des conditions pour lesquelles la périphérie du centrifugeur est soumise à une accélération centrifuge comprise entre 8000 et 14000 m/s2.

4. Dispositif selon l'une des revendications précédentes, caractérisé en ce que le brûleur à combustion interne engendre un jet gazeux dont la pression à la sortie du brûleur est comprise entre 100 et 900 mm de colonne d'eau.

5. Dispositif selon la revendication 4 dans lequel la pression du brûleur se situe dans le domaine de 200 à 600 mm de colonne d'eau.

6. Dispositif selon l'une des revendications précédentes dans la mise en oeuvre duquel la consommation calorifique du brûleur pour une production de fibre dont le micronaire est de 3 sous 5 g est inférieure à 1500 kcal par kg de fibres produites.

## Patentansprüche

1. Vorrichtung zur Erzeugung von Fasern aus einem thermoplastischen Material, mit einer Zentrifuge (10), die sich um eine im wesentlichen vertikale Achse (22) dreht, mit Mitteln zum Versetzen der Zentrifuge in Rotation, mit Mitteln zum Überführen eines Schmelzenstrahles (24) in ausziehbarem Zustand in die Zentrifuge und zu seiner Heranführung auf die innere Oberfläche der Umfangswand der Zentrifuge, mit einer großen Anzahl von Öffnungen (40) in der Umfangswand, durch die die Schmelze in Form von Strahlen (41) hindurchgeht, sowie mit Mitteln zum Ausziehen der Strahlen (41) zu Fasern, wobei diese Mittel einen Brenner mit Innenverbrennung enthalten, der einen nach unten gerichteten ringförmigen Gasstrahl am äußeren Teil der genannten Umfangswand erzeugt, wobei der ringförmige Gasstrom eine erhöhte Temperatur besitzt und dazu beiträgt, daß die Materialstrahlen in ausziehbarem Zustand während einer genügend langen Zeit zum Ausziehen verbleiben, dadurch gekennzeichnet, daß der Durchmesser der Zentrifuge 550 bis 1500 mm beträgt, und daß die Zentrifuge in einer Rotationsbewegung angetrieben wird unter solchen Bedingungen, unter denen ihr Umfang einer Zentrifugalbeschleunigung von 4000 bis 20000 m/s unterworfen ist.

2. Vorrichtung nach Anspruch 1, bei der die Zentrifuge (10) einen Durchmesser von 500 bis 1000 mm besitzt.

3. Vorrichtung nach Anspruch 2, bei der die Zentrifuge (10) unter den Bedingungen in Rotation ist, bei denen der Umfang der Zentrifuge einer Zentrifugalbeschleunigung von 8000 bis 14000 m/s unterworfen ist.

4. Vorrichtung nach einem der vorstehenden Ansprüche, dadurch gekennzeichnet, daß der Brenner mit Innenverbrennung einen Gasstrahl erzeugt, dessen Druck am Brennerausgang 100 bis 900 mm Wassersäule beträgt.

5. Vorrichtung nach Anspruch 4, wobei der Druck des Brenners im Bereich von 200 bis 600 mm Wassersäule liegt.

6. Vorrichtung nach einem der vorstehenden Ansprüche, bei deren Betrieb der wärmeverbrauch des Brenners für eine Erzeugung von Fasern, deren Micronaire 3/5 g beträgt, unter 1500 kcal pro kg erzeugten Fasern liegt.

## Claims

1. Apparatus for producing fibres from a thermoplastics material and comprising a centrifuge (10) revolving about a substantially vertical axis (22), means for driving the said centrifuge with a rotary motion, means of conveying a stream (24) of material molten to the drawable condition into the centrifuge and carrying it onto the inner surface of the peripheral wall of the said centrifuge, a large number of orifices (40) in the peripheral wall through which the molten material passes to form filaments (41), end means of drawing the said filaments (41) into fibres, said means comprising an internal combustion burner delivering an annular gaseous jet adjacent to the outer part of the said peripheral wall which is directed downwardly, the said annular gaseous jet being at an elevated temperature contributing to maintaining the filaments of material under drawable conditions for a period of time sufficient for drawing, characterised in that the diameter of the centrifuge is between 550 and 1500 mm and in that the centrifuge is driven with a rotary movement under conditions in which its periphery is subject to a centrifugal acceleration comprised between 4000 and 20,000 m/s2.

2. Apparatus according to Claim 1, in which the centrifuge (10) has a diameter between 600 and 1000 mm.

3. Apparatus according to Claim 2, in which the centrifuge (10) rotates under conditions in which the periphery of the centrifuge is subject to a centrifugal acceleration of between 8000 and 14000 m/s$^2$

4. Apparatus according to one of the preceding Claims, characterised in that the internal combustion burner generates a gas jet of which the pressure at the outlet from the burner is comprised between 100 and 900 mm WG.

5. Apparatus according to Claim 4, in which the pressure of the burner is within the range from 200 to 600 mm WG.

6. Apparatus according to one of the preceding Claims, in the operation of which the heat consumption of the burner for purposes of producing fibre having a micronaire is 3 under 5 g is less than 1500 kcal per kg of fibres produced.

_Fig. 1_

0 091 381

Fig.2

Fig.3

**Fig.4**

70

10

10

10

71

70

**Fig.5**

10

10

10

41

41

70

71

72

74

72

Fig. 6

Fig. 7